# FASCICULE DE BREVET EUROPEEN

(11) **EP 1 510 717 B1**
(45) Date de publication et mention de la délivrance du brevet: **27.06.2007**
(21) Numéro de dépôt: 04300475.3
(22) Date de dépôt: 26.07.2004
(51) Int. Cl.: F16D 48/06

(54) **Procédé pour sélectionner une loi de commande du système de pilotage d'un embrayage en déterminant trois points de fonctionnement**
Auswahlverfahren für Verhältnis einer Kupplungssteuerung mittels drei Fonctionspunkten
Method of selecting a relation for controlling a clutch actuating system by determining three function points

(30) Priorité: 29.08.2003 FR 0310305
(43) Date de publication de la demande: 02.03.2005
(73) Titulaire: Renault s.a.s., 92100 Boulogne Billancourt (FR)
(72) Inventeur: Guillouzic, Yannick, F-92380 Garches (FR); Rivoiron, Sylvain, F-95320 Saint Leu La Forêt (FR)

(56) Documents cités:
- EP-A- 0 320 261
- EP-A- 0 884 212
- DE-A- 10 032 366
- US-A- 5 337 868

## Description

L'invention propose un procédé de sélection d'une loi de commande d'un actionneur d'ouverture/fermeture de l'embrayage parmi un ensemble de lois de commande mémorisées dans un calculateur du véhicule, comportant :
- une étape de mesure d'un point de fonctionnement réel, dit de "léchage", et
- une étape de sélection de la loi de commande à partir du point de léchage mesuré.

Dans la plupart des boites de vitesses actuelles dites "robotisées", le crabotage des pignons et la fermeture de l'embrayage sont réalisés par l'intermédiaire d'actionneurs commandés, permettant d'avoir un démarrage et un passage de vitesses sans à-coups ni patinage excessif de l'embrayage, et donc un certain confort de conduite du point de vue du conducteur du véhicule.

L'actionneur pour l'ouverture/fermeture de l'embrayage consiste généralement en un dispositif à commande concentrique hydraulique, ou en un dispositif à fourchette.

Les caractéristiques mécaniques de l'embrayage d'un même véhicule sont susceptibles d'évoluer au cours du temps et pendant l'utilisation du véhicule, notamment à cause de l'usure des pièces de frottement ou d'une élévation de la température de l'embrayage.

Ainsi, pour assurer des conditions de fermeture et d'ouverture de l'embrayage optimales, on peut adapter les caractéristiques de la commande de l'actionneur d'ouverture/ fermeture de l'embrayage au cours de l'utilisation du véhicule. DE-A-100 32 366 décrit un procédé pour corriger la valeur de la position d'actionnement.

Un ensemble de lois de commande de l'actionneur d'ouverture/fermeture de l'embrayage peuvent ainsi être mémorisées dans un calculateur électronique utilisé pour la commande de l'actionneur d'ouverture/fermeture de l'embrayage. Ces lois de commande associent généralement la position de l'actionneur d'ouverture/fermeture, c'est-à-dire le degré de fermeture de l'embrayage à la valeur du couple maximal que l'embrayage peut transmettre. On parle alors de couple transmissible par l'embrayage pour chaque position de l'actionneur d'ouverture/fermeture.

Puisque les caractéristiques mécaniques de l'embrayage sont soumises à variation, il est nécessaire de contrôler l'embrayage, pour que la loi de commande la mieux adaptée soit utilisée.

La sélection de la loi de commande peut ainsi être effectuée en mesurant un point de fonctionnement de l'embrayage, puis en sélectionnant la loi de commande la plus proche de ce point de commande, c'est-à-dire celle qui permet de déterminer un point de fonctionnement théorique qui est le plus proche de ce point de fonctionnement mesuré.

Un point de fonctionnement particulier, dit "point de léchage", est mesuré lorsque le véhicule est immobile, et correspond à la position de l'embrayage lorsque le couple transmissible est non nul, c'est-à-dire au début du "collage" de l'embrayage, par exemple de l'ordre un couple transmissible d'une amplitude de 2 ou 3 Nm.

Dans la pratique, les différentes loi de commande qui sont mémorisées, sont relativement proches les unes des autres au niveau de ce point de léchage, car les différences de position théorique de l'actionneur d'ouverture/fermeture, pour un couple transmissible proche de celui du point de léchage, sont relativement faibles.

Ainsi, la sélection d'une loi de commande à partir de ce seul point s'avère relativement peu précise, et elle peut aboutir en ce que la loi sélectionnée ne corresponde pas aux caractéristiques réelles de l'embrayage.

L'invention propose un procédé de sélection d'une loi de commande de l'actionneur d'ouverture/fermeture de l'embrayage plus précis qu'à partir seulement du point de léchage de l'embrayage.

Dans ce but, ce procédé comporte au moins deux autres étapes de mesure consistant chacune à mesurer un autre point de fonctionnement distinct, et l'étape de sélection consiste à sélectionner la loi de commande à partir du point de léchage et des autres points de fonctionnement.

De préférence, la première étape de mesure ajoutée comporte une première sous étape qui consiste à ouvrir progressivement l'embrayage jusqu'à ce que la vitesse de rotation de l'arbre primaire diffère de la vitesse de rotation de l'arbre secondaire d'une valeur prédéfinie, et une deuxième sous étape de fermeture progressive de l'embrayage jusqu'à ce que la vitesse de rotation de l'arbre primaire soit égale à la vitesse de rotation de l'arbre secondaire, et une dernière sous étape de mesure du point de fonctionnement correspondant à la position de l'actionneur d'ouverture/fermeture lorsque la vitesse de rotation de l'arbre primaire est égale à la vitesse de rotation de l'arbre secondaire.

La deuxième étape de mesure ajoutée consiste par exemple à mesurer la position de l'actionneur d'ouverture/fermeture lorsque la valeur du couple maximal pouvant être transmis par l'embrayage est égale à une valeur déterminée.

L'invention propose aussi un agencement pour la commande d'un actionneur d'ouverture/fermeture d'un embrayage, comportant un système de commande de l'actionneur d'ouverture/fermeture, un dispositif de calcul apte à sélectionner la loi de commande parmi un ensemble de lois de commande mémorisées dans un module de mémoire, ce dispositif de calcul étant apte à commander le système de commande, pour la mise en oeuvre de la première étape de mesure ajoutée.

D'autres caractéristiques et avantages de l'invention apparaîtront à la lecture de la description détaillée qui suit pour la compréhension de laquelle on se reportera aux figures annexées parmi lesquelles :
- la figure 1 représente l'ensemble des courbes de transmissibilité qui sont mémorisées et parmi lesquelles la loi utilisée sera sélectionnée ;
- la figure 2 représente la courbe de transmissibilité de l'embrayage à un moment donné, et la position des divers points de mesure sur cette courbe ;
- la figure 3 est un diagramme temporel représentant les variations de vitesses de rotation lors de la première autre étape de mesure ;
- la figure 4 est une représentation schématique de l'actionneur d'ouverture/fermeture de l'embrayage et du système de commande.

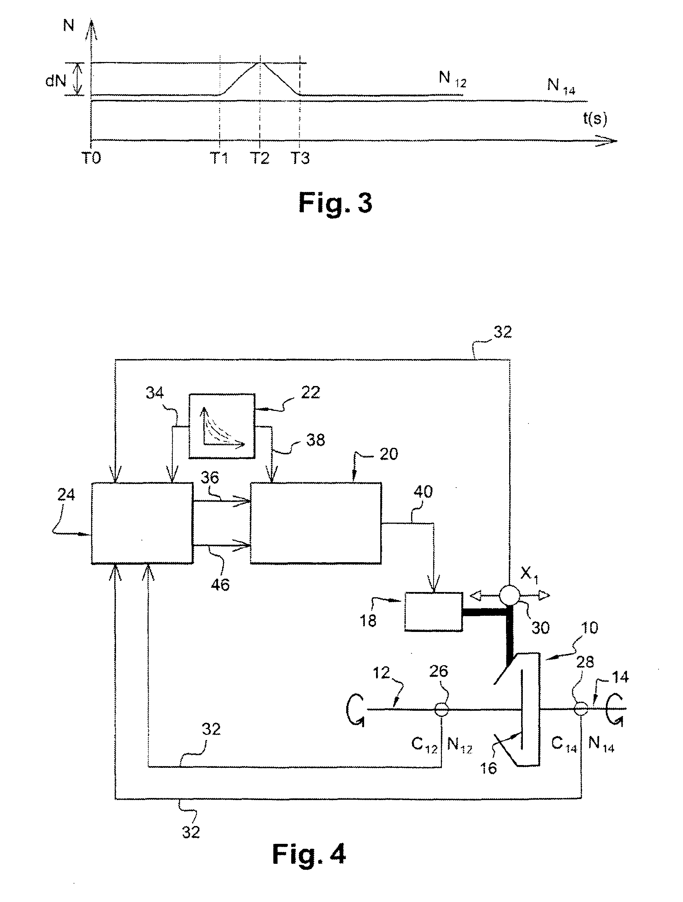

On a représenté sur la figure 4, l'embrayage 10 d'un véhicule automobile, qui comporte un arbre d'entrée 12 qui est relié au moteur du véhicule, un arbre de sortie 14 qui est relié à une roue du véhicule, et des moyens d'accouplement 16 de l'arbre de sortie 14 avec l'arbre d'entrée 12.

Les moyens d'accouplement 16 comportent notamment un élément mobile qui permet d'avoir une progressivité de l'accouplement en rotation des deux arbres 12, 14 de l'embrayage 10. La position de l'élément mobile, qui correspond à un degré d'ouverture de l'embrayage 10, est commandée par un actionneur d'ouverture/fermeture 18 de l'embrayage 10 que l'on a représenté schématiquement ici par un vérin, mais qui peut être de tout type connu, comme par exemple du type dit "à fourchette", ou du type à commande concentrique hydraulique.

L'actionneur d'ouverture/fermeture 18 est commandé par un système de commande 20 en fonction de la position de l'actionneur d'ouverture/fermeture 18 ou en fonction du couple à transmettre par l'embrayage 10 selon le fonctionnement du véhicule.

La variation de la valeur maximale du couple que l'embrayage 10 est apte à transmettre, ou couple transmissible, n'est pas proportionnelle à la variation de la position de l'actionneur d'ouverture/fermeture 18.

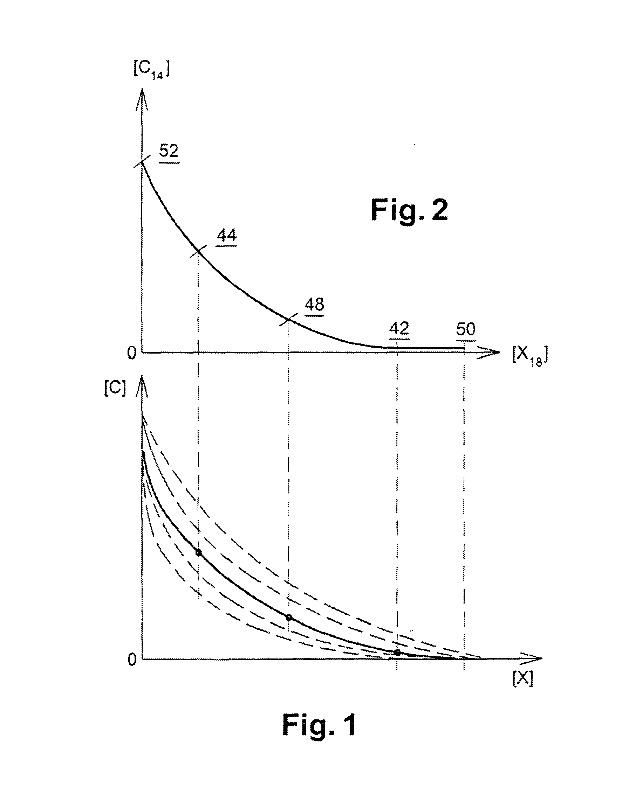

Ainsi, la commande de l'actionneur d'ouverture/fermeture 18 s'effectue à partir de plusieurs lois de commande qui sont mémorisées dans un module de mémoire 22, dont on a représenté schématiquement les courbes représentatives à la figure 1, et dont chacune associe une valeur théorique du couple transmissible en fonction de la position de l'actionneur d'ouverture/fermeture 18,

Pendant l'utilisation du véhicule, et au cours du temps, les caractéristiques mécaniques de l'embrayage 10 sont aptes à évoluer, de manière que, pour une même position de l'actionneur d'ouverture/fermeture 18, la valeur du couple transmissible n'est pas constante.

C'est pourquoi le système de commande 20 est associé à un dispositif de calcul 24 qui est apte à déterminer un index de transmissibilité de l'embrayage 10, qui est représentatif des caractéristiques mécaniques de l'embrayage 10 à tout moment.

L'index de transmissibilité qui a été déterminé par le dispositif de calcul 24 est ensuite transmis au système de commande 20, comme on l'a représenté à la figure 4 par la flèche 36. le système de commande 20 est alors apte à transmettre des ordres de commande à l'actionneur d'ouverture/fermeture 18, comme on l'a représenté par la flèche 40, qui permettent d'obtenir un fonctionnement de l'embrayage 10 le plus proche de celui désiré.

Par la suite, le système de commande 20 interrogera le module de mémoire 22, comme on l'a représenté par la flèche 38, pour utiliser la loi de commande associée à l'index de transmissibilité qui lui a été transmis par le dispositif de calcul 28.

La détermination de l'index de transmissibilité précité est effectuée par la mesure de différents points de fonctionnement de l'embrayage 10. Pour cela, l'embrayage 10 comporte deux points de mesure 26, 28, associés à l'arbre d'entrée 12 et à l'arbre de sortie 14, respectivement, au niveau desquels sont mesurées les valeurs du couple C12, C14 et de la vitesse de rotation N12, N14, de l'arbre 12, 14 associé.

De plus, l'embrayage 10 comporte un troisième point de mesure 30 de la position X18 de l'actionneur d'ouverture/ fermeture 18.

L'ensemble des valeurs ainsi mesurées C12, C14, N12, N14 et X18 sont transmises au dispositif de calcul 24, comme on l'a représenté à la figure 4 par des flèches 32, puis elles sont traitées par le dispositif de calcul 24 pour déterminer des points de fonctionnement réels de l'embrayage 10, et enfin pour déterminer l'index de transmissibilité associé à la loi de commande à utiliser.

Le dispositif de calcul 24 met en oeuvre un procédé de sélection de la loi de commande de l'actionneur d'ouverture/fermeture 18, que l'on va maintenant décrire plus en détail.

La détermination de la loi de commande à utiliser est effectuée en sélectionnant, parmi l'ensemble des lois de commande mémorisées dans le module mémoire 22, la loi de commande qui est la plus proche des points de fonctionnement réels qui ont été déterminés. Pour cela, le dispositif de calcul 24 a accès au module de mémoire 22, comme on l'a représenté à la figure 4 par la flèche 34.

Une première étape du procédé de sélection consiste à mesurer un premier point de fonctionnement de l'embrayage 10, appelé point de "léchage", qui est mesuré lorsque le véhicule est immobile et lorsque le couple transmissible est non nul. L'embrayage 10 est fermé progressivement jusqu'au moment où la valeur du couple C14 au niveau de l'arbre de sortie 14 devient non nulle, ou égale à une valeur prédéterminée, par exemple de 3 Nm. À ce moment, le dispositif de calcul 24 relève la valeur du couple C14 au niveau de l'arbre secondaire 14 et la valeur de la position X18 de l'actionneur d'ouverture/fermeture. On obtient alors le point de léchage, représenté à la figure 2 par le point 42.

Conformément à l'invention, le procédé de sélection proposé comporte aussi deux autres étapes de mesure qui consistent chacune à mesurer un autre point de fonctionnement de l'embrayage 10, distinct des autres points de fonctionnement mesurés.

Une première de ces autres étapes de mesure consiste à mesurer un deuxième point de fonctionnement 44 de l'embrayage 10 lorsque le véhicule circule à une vitesse constante, et lorsque le couple transmis par l'embrayage 10 est relativement élevé, c'est-à-dire par exemple lorsque le couple transmis par l'embrayage 10 est supérieur aux deux tiers du couple maximum que le moteur peut produire.

Comme on peut le voir sur la figure 2, ce deuxième point de fonctionnement 44 correspond à une valeur de la position X18 de l'actionneur d'ouverture/fermeture 18 relativement faible, c'est-à-dire lorsque l'embrayage 10 est proche de sa position extrême de fermeture.

On a représenté à la figure 3 le diagramme temporel représentatif de l'étape de mesure de ce deuxième point de fonctionnement 44.

L'origine du diagramme, située à un temps T0, correspond à un instant où le dispositif de calcul 24 estime que la vitesse du véhicule, et donc les vitesses N12 et N14 des arbres primaire et secondaire 12, 14, est constante et est peu susceptible de varier.

À un instant T1, le, dispositif de calcul 24 initie l'étape de calcul du deuxième point de fonctionnement 44,

Selon une première sous étape, le dispositif de calcul 24 envoie un ordre au système de commande 20, comme on l'a représenté à la figure 4 par la flèche 46, pour commander l'ouverture progressive de l'embrayage 10. On obtient alors un patinage des moyens d'accouplement qui se traduit par une augmentation de la vitesse de rotation N12 de l'arbre d'entrée 12 par rapport à la vitesse de rotation N14 de l'arbre de sortie 14.

L'embrayage 10 est ouvert progressivement jusqu'au moment T2 où la vitesse de rotation de l'arbre d'entrée 12 diffère de la vitesse rotation N14 de l'arbre de sortie 14 d'une valeur dN prédéfinie.

A ce moment T2, et selon une deuxième sous étape, le dispositif de calcul 24 envoie un deuxième ordre au système de commande 20 pour commander la fermeture progressive de l'embrayage 10. La vitesse rotation N12 de l'arbre de sortie 12 décroît alors jusqu'à devenir égale à la vitesse de rotation N14 de l'arbre de sortie 14.

Le moment T3 où la vitesse de rotation N12 devient égale à la vitesse rotation N14 de l'arbre de sortie 14 est le moment où le couple transmis par l'embrayage 10 est égal au couple transmissible, pour la même position de l'actionneur d'ouverture/fermeture 18, c'est-à-dire qui correspond au deuxième point de fonctionnement 44 à mesurer.

Ainsi, à ce moment T3, et selon une troisième sous étape. le dispositif de calcul 24 relève la valeur du couple C14 au niveau de l'arbre de sortie 14 et la valeur de la positron X18 de l'actionneur d'ouverture/fermeture, qui sont les coordonnées du deuxième point de fonctionnement 44 sur la courbe représentée à la figure 2.

La deuxième de ces autres étapes de mesure consiste à mesurer un troisième point de fonctionnement 48, qui est un point intermédiaire entre le point de léchage 42 et le deuxième point de fonctionnement 44.

Selon un premier aspect du procédé, la deuxième étape de mesure consiste à mesurer la position de l'actionneur d'ouverture/fermeture 18 lorsque le couple transmis par l'embrayage 10 est égal à un couple d'une valeur prédéterminée, par exemple ici un couple d'une valeur égale à un tiers du couple maximum que le moteur peut fournir.

Selon un deuxième aspect du procédé, la deuxième étape de mesure consiste à mesurer le troisième point de fonctionnement 48 lors de la mise en mouvement du véhicule.

Dans cette deuxième étape de mesure, le dispositif de calcul 24 relève au cours de la fermeture l'embrayage 10 la position X18 de l'actionneur d'ouverture/fermeture 18 et la valeur du couple C14 au niveau de l'arbre de sortie 14 lorsque la vitesse de rotation N14 de l'arbre entraînement 14 devient égale à la vitesse rotation N12 de l'arbre d'entrée 12.

En effet, lorsque des vitesses de rotation N12 et N14 de l'arbre de sortie 14 et de l'arbre d'entrée 12 deviennent égales, cela signifie que la valeur du couple C12 au niveau de l'arbre d'entrée 12 est égale au couple résistant généré par le véhicule, et est égale à la valeur du couple qui est fourni par le moteur.

Après avoir déterminé ces trois points de fonctionnement réels 42, 44 et 48, et selon une dernière étape du procédé conforme à l'invention, le dispositif de calcul 24 sélectionne parmi l'ensemble des lois de commande mémorisées dans le module de mémoire 22 la loi qui permet de déterminer des points de fonctionnement théoriques qui sont les plus proches des trois points de fonctionnement réels 42, 44 et 48.

Cette sélection est effectuée par calcul mathématique qui peut être à partir de toute méthode connue.

Enfin, lorsque le dispositif de calcul 24 a sélectionné la loi de commande la plus adaptée aux caractéristiques de l'embrayage 10, et selon une dernière étape du procédé, le dispositif de calcul 24 transmet au système de commande 20 l'index de transmissibilité associé à la loi de commande sélectionnée.

Les étapes de mesure du point de léchage 42, du deuxième et du troisième points 44, 48 peuvent être mises en oeuvre périodiquement, à la fin d'une intervalle de temps, ou bien lorsque le véhicule a parcouru une certaine distance.

Les étapes de mesure du point de léchage 42 et du deuxième et du troisième points 44, 48, peuvent aussi être mises en oeuvre chaque fois que cela est possible, c'est-à-dire à chaque démarrage du moteur, chaque fois que le véhicule circule à vitesse constante, et à chaque mise en mouvement du véhicule, respectivement,

Ceci permet d'éviter que les étapes de mesure du point de léchage 42 et du troisième point 48 se soient trop espacées dans le temps et donc que ces points de fonctionnement mesurés 42, 48, ne soient plus caractéristiques de l'état de l'embrayage 10 au moment où l'étape de sélection est mise en oeuvre.

Enfin, selon un mode de réalisation préféré de l'invention, l'étape de sélection peut être mise en oeuvre après chaque étape de mesure du deuxième point, cette dernière n'intervenant que postérieurement aux étapes de mesure du point de léchage 42 et du troisième point 48, et ne pouvant être mise en oeuvre qu'à une fréquence moindre,

Le procédé inclut avantageusement une étape initiale de mesure des points extrêmes de fonctionnement de l'embrayage 10.

Un premier point de fonctionnement extrême 50 correspond à la position extrême d'ouverture de l'embrayage 10, dans laquelle il ne transmet aucun couple, et le deuxième point de fonctionnement extrême 52 correspond à la en position extrême de fermeture de l'embrayage 10, lorsque la course X18 de l'actionneur d'ouverture/fermeture 18 est nulle. On peut ainsi considérer que l'étape de sélection de la loi de commande est effectuée à partir de cinq points de fonctionnement..

## Revendications

1. Procédé de sélection d'une loi de commande d'un actionneur d'ouverture/fermeture (18) de l'embrayage (10) parmi un ensemble de lois de commande mémorisées dans un calculateur du véhicule, comportant :
- une étape de mesure d'un point de fonctionnement réel (42), dit de "léchage", et
- une étape de sélection de la loi de commande à partir du point de léchage mesuré,
**caractérisé en ce qu**'il comporte en outre au moins deux autres étapes de mesure consistant chacune à mesurer un autre point de fonctionnement distinct (44, 48), et en ce que l'étape de sélection consiste à sélectionner la loi de commande à partir du point de léchage (42) et des autres points de fonctionnement (44, 48).

2. Procédé selon la revendication 1, **caractérisé en ce qu'**une première autre étape de mesure comporte :
- une première sous-étape qui consiste à ouvrir progressivement l'embrayage (10) jusqu'à ce que la vitesse de rotation (N12) de l'arbre d'entrée de l'embrayage (12) diffère de la vitesse de rotation (N14) de l'arbre de sortie de l'embrayage (14) d'une valeur (dN) prédéfinie ;
- une deuxième sous-étape de fermeture progressive de l'embrayage (10) jusqu'à ce que la vitesse de rotation (N12) de l'arbre d'entrée (12) soit égale à la vitesse de rotation (N14) de l'arbre de sortie (14), et
- une dernière sous-étape de mesure du point de fonctionnement (44) correspondant à la position (X18) de l'actionneur d'ouverture/fermeture (18) lorsque la vitesse de rotation (N12) de l'arbre d'entrée (12) est égale à la vitesse de rotation (N14) de l'arbre de sortie (14).

3. Procédé selon la revendication précédente, **caractérisé en ce que** ladite première autre étape de mesure est mise en oeuvre lorsque le couple transmis (C14) par l'embrayage (10) est au moins égal à 2/3 du couple maximum généré par le moteur du véhicule.

4. Procédé selon l'une des revendications 2 ou 3, **caractérisé en ce qu**'une deuxième autre étape de mesure consiste à mesurer la position (X18) de l'actionneur d'ouverture/fermeture (18) lorsque la valeur du couple maximal (C14) pouvant être transmis par l'embrayage (10) est égale à une valeur prédéterminée.

5. Procédé selon l'une des revendications 2 ou 3, **caractérisé en ce qu**'une deuxième autre étape de mesure consiste à mesurer la position (X18) de l'actionneur d'ouverture/fermeture (18) et la valeur du couple maximal (C14) pouvant être transmis par l'embrayage (10) lors de la mise en mouvement du véhicule.

6. Procédé selon l'une des revendications 4 ou 5, **caractérisé en ce que** ladite deuxième autre étape de mesure consiste à mesurer la position (X18) de l'actionneur d'ouverture/fermeture (18) et le couple (C14) transmis par l'embrayage (10) lorsque la vitesse de rotation (N14) de l'arbre de sortie (14) devient égale à la vitesse de rotation (N12) de l'arbre d'entrée (12).

7. Procédé selon l'une quelconque des revendications précédentes, **caractérisé en ce que** l'étape de mesure du point de léchage (42) consiste, lorsque le véhicule est immobile et lorsque l'embrayage (10) est dans une position extrême d'ouverture, à fermer progressivement l'embrayage (10) jusqu'à ce que l'embrayage (10) soit apte à transmettre un couple (C14) non nul, puis à mesurer la position (X18) de l'actionneur d'ouverture/fermeture (18) et la valeur du couple (C14) que l'embrayage (10) est apte à transmettre lorsque l'embrayage (10) est dans une telle position.

8. Procédé selon l'une quelconque des revendications précédentes, **caractérisé en ce que** l'étape de sélection consiste à sélectionner la loi de commande qui permet de déterminer les points de fonctionnement théoriques les plus proches du point de léchage (42) et des autres points de fonctionnement mesurés (44, 48).

9. Agencement pour la commande d'un actionneur d'ouverture/fermeture (18) d'un embrayage (10), mettant en oeuvre le procédé selon l'une quelconque des revendications précédentes, **caractérisé en ce qu'**il comporte un système de commande (20) de l'actionneur d'ouverture/fermeture (18), un dispositif de calcul (24) apte à sélectionner la loi de commande parmi un ensemble de lois de commandes mémorisées dans un module de mémoire (22), et **en ce que** le dispositif de calcul (24) est apte à commander le système de commande (20), pour la mise en oeuvre de la première autre étape de mesure.

## Claims

1. Method of selecting a relation for controlling an actuator (18) for letting a clutch (10) out/in from among a collection of control relations stored in memory in a computer of the vehicle, involving:
- a step of measuring a real operating point (42) known as the "kiss point", and
- a step of selecting the control relation on the basis of the kiss point measured,
**characterized in that** it further involves at least two other measurement steps, each one consisting in measuring another distinct operating point (44, 48), and **in that** the selection step consists in selecting the control relation on the basis of the kiss point (42) and of the other operating points (44, 48).

2. Method according to Claim 1, **characterized in that** a first other measurement step involves:
- a first substep which consists in gradually letting the clutch (10) out until the rotational speed (N12) of the clutch input shaft (12) differs from the rotational speed (N14) of the clutch output shaft (14) by a predefined value (dN);
- a second substep of gradually letting the clutch (10) in until the rotational speed (N12) of the input shaft (12) is equal to the rotational speed (N14) of the output shaft (14), and
- a last substep of measuring the operating point (44) corresponding to the position (X18) of the letting out/in actuator (18) when the rotational speed (N12) of the input shaft (12) is equal to the rotational speed (N14) of the output shaft (14).

3. Method according to the preceding claim, **characterized in that** the said first other measurement step is performed when the torque (C14) transmitted by the clutch (10) is at least equal to 2/3 of the maximum torque generated by the vehicle engine.

4. Method according to one of Claims 2 and 3, **characterized in that** a second other measurement step consists in measuring the position (X18) of the letting out/in actuator (18) when the value of the maximum torque (C14) that can be transmitted by the clutch (10) is equal to a predetermined value.

5. Method according to one of Claims 2 and 3, **characterized in that** a second other measurement step consists in measuring the position (X18) of the letting out/in actuator (18) and the value of the maximum torque (C14) that can be transmitted by the clutch (10) as the vehicle moves off.

6. Method according to one of Claims 4 and 5, **characterized in that** the said second other measurement step consists in measuring the position (X18) of the letting out/in actuator (18) and the torque (C14) transmitted by the clutch (10) when the rotational speed (N14) of the output shaft (14) becomes equal to the rotational speed (N12) of the input shaft (12).

7. Method according to any one of the preceding claims, **characterized in that** the step of measuring the kiss point (42) consists, when the vehicle is stationary and the clutch (10) is fully let out, in gradually letting the clutch (10) in until the clutch (10) is able to transmit a non-zero torque (C14), then in measuring the position (X18) of the letting out/in actuator (18) and the value of the torque (C14) that the clutch (10) is able to transmit when the clutch (10) is in such a position.

8. Method according to any one of the preceding claims, **characterized in that** the selection step consists in selecting the control relation that allows the theoretical operating points closest to the kiss point (42) and to the other measured operating points (44, 48) to be determined.

9. Arrangement for controlling an actuator (18) for letting a clutch (10) out/in, employing the method according to any one of the preceding claims, **characterized in that** it comprises a control system (20) for controlling the letting out/in actuator (18), a calculation device (24) able to select the control relation from among a collection of control relations stored in a memory module (22), and **in that** the calculation device (24) is able to control the control system (20) for performing the first other measurement step.

## Patentansprüche

1. Verfahren zum Wählen eines Gesetzes zur Steuerung eines Betätigungselements zum Einrücken/Ausrücken (18) der Kupplung (10) aus einer Menge von Steuerungsgesetzen, die in einem Fahrzeugrechner gespeichert sind, umfassend:
- einen Schritt zum Messen eines realen Betriebspunktes (42), "Leckpunkt" genannt, und
- einen Schritt zum Wählen des Steuerungsgesetzes ab dem gemessenen Leckpunkt,
**dadurch gekennzeichnet, dass** es außerdem mindestens zwei weitere Schritte zum Messen umfasst, die jeweils aus dem Messen eines anderen unterschiedlichen Betriebspunktes (44, 48) besteht und dass der Schritt des Wählens aus dem Wählen des Steuerungsgesetzes ab dem Leckpunkt (42) und der anderen Betriebspunkte (44, 48) besteht.

2. Verfahren nach Anspruch 1, **dadurch gekennzeichnet, dass** ein erster weiterer Schritt des Messens umfasst:
- einen ersten Unterschritt, der im stufenweisen Einrücken der Kupplung (10) besteht, bis die Drehzahl (N12) der Antriebswelle der Kupplung (12) sich von der Drehzahl (N14) der Abtriebswelle der Kupplung (14) um einen vorherbestimmten Wert (dN) unterscheidet;
- einen zweiten Unterschritt des stufenweisen Ausrückens der Kupplung (10), bis die Drehzahl (N12) der Antriebswelle (12) gleich der Drehzahl (N14) der Abtriebswelle (14) ist, und
- einen letzten Unterschritt des Messens des Betriebspunktes (44), der der Position (X18) des Betätigungselementes zum Einrücken/Ausrücken (18) entspricht, wenn die Drehzahl (N12) der Antriebswelle (12) gleich der Drehzahl (N14) der Abtriebswelle (14) ist.

3. Verfahren nach dem vorhergehenden Anspruch, **dadurch gekennzeichnet, dass** der erste weitere Schritt des Messens implementiert wird, wenn das von der Kupplung (10) übertragene Drehmoment (C14) mindestens gleich 2/3 des maximalen Drehmoments ist, das von dem Fahrzeugmotor erzeugt wird.

4. Verfahren nach einem der Ansprüche 2 oder 3, **dadurch gekennzeichnet, dass** ein zweiter weiterer Schritt des Messens im Messen der Position (X18) des Betätigungselements zum Einrücken/Ausrücken (18) besteht, wenn der Wert des maximalen Drehmoments (C14), das durch die Kupplung (10) übertragen werden kann, gleich einem vorherbestimmten Wert ist.

5. Verfahren nach einem der Ansprüche 2 oder 3, **dadurch gekennzeichnet, dass** ein zweiter weiterer Schritt des Messens im Messen der Position (X18) des Betätigungselements zum Einrücken/Ausrücken (18) des Wertes des maximalen Drehmoments (C14), das durch die Kupplung (10) übertragen werden kann, wenn das Fahrzeug in Gang gebracht wird, besteht.

6. Verfahren nach einem der Ansprüche 4 oder 5, **dadurch gekennzeichnet, dass** der zweite weitere Schritt des Messens im Messen der Position (X18) des Betätigungselements zum Einrücken/Ausrücken (18) und des Drehmoments (C14), das von der Kupplung (10) übertragen wird, wenn die Drehzahl (N14) der Abtriebswelle (14) gleich der Drehzahl (N12) der Antriebswelle (12) wird, besteht.

7. Verfahren nach einem der vorhergehenden Ansprüche, **dadurch gekennzeichnet, dass** der Schritt des Messens des Leckpunktes (42) im stufenweisen Ausrücken der Kupplung (10) bis die Kupplung (10) dazu fähig ist, ein Drehmoment (C14), das nicht null ist, zu übertragen, wenn das Fahrzeug stationär ist und wenn die Kupplung (10) sich in einer äußerst ausgerückten Position befindet, dann im Messen der Position (X18) des Betätigungselements zum Einrücken/Ausrücken (18) und dem Wert des Drehmoments (C14), das die Kupplung (10) übertragen kann, wenn die Kupplung (10) sich in einer derartigen Position befindet, besteht.

8. Verfahren nach einem der vorhergehenden Ansprüche, **dadurch gekennzeichnet, dass** der Schritt des Wählens im Wählen des Steuerungsgesetzes besteht, das die Bestimmung der theoretischen Betriebspunkte, die am nächsten beim Leckpunkt (42) sind, und der anderen gemessenen Betriebspunkte (44, 48) ermöglicht.

9. Anordnung für die Steuerung eines Betätigungselements zum Einrücken/Ausrücken (18) einer Kupplung (10), die das Verfahren nach einem der vorhergehenden Ansprüche implementiert, **dadurch gekennzeichnet, dass** sie ein Steuerungssystem (20) des Betätigungselements zum Einrücken/Ausrücken (18), eine Berechnungsvorrichtung (24), die dazu fähig ist, das Steuerungsgesetz aus einer Menge von in einem Speichermodul (22) gespeicherten Steuerungsgesetzen auszuwählen, umfasst, und **dadurch**, dass die Berechnungsvorrichtung (24) dazu fähig ist, das Steuerungssystem (20) zu steuern, um den ersten anderen Schritt des Messens zu implementieren.
